# EUROPEAN PATENT APPLICATION

(11) **EP 3 737 154 A1**
(43) Date of publication of application: **11.11.2020**
(21) Application number: 18898090.8
(22) Date of filing: 20.12.2018
(51) Int. Cl.: H04W 36/02

(54) **USER EQUIPMENT AND RELATED METHOD**

(30) Priority: 05.01.2018 CN 201810013313
(71) Applicant: Sharp Kabushiki Kaisha, Sakai-shi Osaka 590-8522 (JP); FG Innovation Company Limited, New Territories, Hong Kong (CN)
(72) Inventor: XIAO, Fangying, Shanghai 201206 (CN); LIU, Renmao, Sakai, Osaka 590--8522 (JP); YAMADA, Shohei, Sakai City, Osaka 590-8522 (CN)
(74) Representative: Müller Hoffmann & Partner
(86) International application number: PCT/CN2018/122345
(87) International publication number: WO 2019/134529

(57) **Abstract**

The present application provides user equipment and a related method. The method is performed by User Equipment (UE). A transmitting Packet Data Convergence Protocol (PDCP) entity is configured with packet duplication and is associated with two Radio Link Control (RLC) entities. The method comprises: receiving a packet duplication activation/deactivation Medium Access Control (MAC) Control Element (CE); and discarding, by the transmitting PDCP entity, a PDCP Protocol Data Unit (PDU) having been submitted to either of the associated RLC entities. The method can reduce the volume of data required to be transmitted, thereby conserving communication resources and improving communication efficiency and communication speed.

## Description

### Technical Field

The present disclosure relates to the technical field of wireless communications, and more specifically, to user equipment and a related method for operation and data volume calculation in a packet duplication deactivated state.

### Background

A new research project on 5G technical standards (see non-patent literature: RP-160671: New SID Proposal: Study on New Radio Access Technology) was proposed by NTT DOCOMO at the 3rd Generation Partnership Project (3GPP) RAN #71 plenary meeting held in March 2016, and was approved. The goal of the research project is to develop a New Radio (NR) access technology to meet all of the application scenarios, requirements, and deployment environments of 5G. NR mainly has three application scenarios: Enhanced Mobile Broadband Communications (eMBB), massive Machine Type Communications (mMTC), and Ultra Reliable and Low Latency Communications (URLLC).

In the 3GPP RAN2 #96 meeting held in October 2016, it was agreed that research will be conducted on multi-connectivity (including dual-connectivity) so as to meet the reliability requirement of the URLLC. The multi-connectivity can adopt mechanisms such as packet duplication or link selection. In the 3GPP RAN2 #NR AdHoc meeting held in January 2017, it was agreed that an NR-PDCP entity supports a packet duplication function of a user plane and a control plane, where the function of a transmitting PDCP entity is to support packet duplication, whereas the function of a receiving PDCP entity is to support discarding of duplicate packets. In the 3GPP RAN2 #97 meeting held in February 2017, it was agreed that both uplink and downlink support packet duplication: in carrier aggregation, packet duplication uses a Packet Data Convergence Protocol (PDCP) Protocol Data Unit (PDU) and/or Service Data Unit (SDU) for transmission on two or more logical channels and causes duplicate PDCP PDUs to be transmitted via different carriers. In the 3GPP RAN2 #98 meeting held in April 2017, it was agreed that in Radio Resource Control (RRC) configuration, two duplicate logical channels are mapped to different carriers, that is, duplicate logical channels cannot be mapped to the same carrier. In the 3GPP RAN2 #NR AdHoc meeting held in June 2017, it was agreed that in a carrier aggregation scenario, after the packet duplication function is deactivated, corresponding restrictions on association between logical channels and carriers become invalid, and User Equipment (UE) transmits new data through a specific logical channel. In the 3GPP RAN2 #99 meeting held in August 2017, it was agreed that in a dual-connectivity scenario, when the packet duplication function of a Data Radio Bearer (DRB) is deactivated via a Medium Access Control (MAC) Control Element (CE), UE falls back to split bearer operation according to the configuration of the split bearer operation.

It is desirable to solve the problems of related operation of a transmitting PDCP entity and calculation of a PDCP data volume after deactivation of a packet duplication function in carrier aggregation and multi-connectivity scenarios in which packet duplication is supported.

### Summary

The present invention provides user equipment and a related method capable of solving the aforementioned problems.

In user equipment and a related method provided by the present invention, in a scenario in which packet duplication is supported, after deactivation of a packet duplication function, discarding operation performed by a transmitting PDCP entity can reduce the volume of data required to be transmitted, thereby conserving communication resources and improving communication efficiency and communication speed.

In other user equipment and another related method provided by the present invention, in a scenario in which packet duplication is supported, after deactivation of a packet duplication function, a PDCP data volume is calculated, so that communication resources can be effectively allocated according to the volume of data required to be transmitted, thereby improving communication efficiency and communication speed.

According to a first aspect of the present invention, a method performed by User Equipment (UE) is provided, a transmitting Packet Data Convergence Protocol (PDCP) entity being configured with packet duplication and associated with two Radio Link Control (RLC) entities, wherein the method comprises: receiving a packet duplication activation/deactivation Medium Access Control (MAC) Control Element (CE); and discarding, by the transmitting PDCP entity, a PDCP Protocol Data Unit (PDU) having been submitted to either of the associated RLC entities.

According to a second aspect of the present invention, a method performed by User Equipment (UE) is provided, a transmitting Packet Data Convergence Protocol (PDCP) entity being configured with packet duplication and associated with two Radio Link Control (RLC) entities, wherein the method comprises: receiving a packet duplication activation/deactivation Medium Access Control (MAC) Control Element (CE); and calculating a PDCP data volume of the transmitting PDCP entity, wherein the PDCP data volume comprises: (1) a PDCP Service Data Unit (SDU) for which a PDCP data Protocol Data Unit (PDU) has not been established; (2) a PDCP data PDU having not been submitted to an RLC entity to be used after deactivation of packet duplication; (3) a PDCP control PDU having not been submitted to the RLC entity to be used after the deactivation of packet duplication; (4) a PDCP SDU to be retransmitted described by a PDCP entity re-establishment procedure for an Acknowledged Mode Data Radio Bearer (AM DRB); and (5) a PDCP data PDU to be retransmitted described by a data recovery procedure for the AM DRB.

In an embodiment, the method further comprises: discarding, by the transmitting PDCP entity, a PDCP PDU having been submitted to either of the associated RLC entities. In an embodiment, the discarding, by the transmitting PDCP entity, a PDCP PDU having been submitted to either of the associated RLC entities comprises: discarding, by the transmitting PDCP entity, a PDCP PDU having been submitted to a primary RLC entity, or a PDCP PDU having been submitted to a secondary RLC entity but having not been submitted to the primary RLC entity, or a PDCP PDU having been submitted to the RLC entity to be used.

In an embodiment, the method further comprises: re-establishing an RLC entity to which the transmitting PDCP entity no longer transmits any PDCP PDU after the deactivation of packet duplication.

In an embodiment, the method further comprises: instructing, by the transmitting PDCP entity, one of the RLC entities to discard the PDCP PDU having been submitted to the other one of the RLC entities, or instructing one of the RLC entities to discard the PDCP PDU having been submitted to the two RLC entities.

In an embodiment, the PDCP PDU that the transmitting PDCP entity instructs to discard is a PDCP PDU for which a transmission success indication has not been received from a lower layer.

In an embodiment, after the deactivation of packet duplication, the transmitting PDCP entity still receives data transmission service acknowledgment from the RLC entity to which the PDCP PDU is no longer transmitted.

In an embodiment, the method further comprises: determining whether a data split threshold is configured; and if the data split threshold is configured, and if the total amount of the PDCP data volume and an RLC data volume used for initial transmission by a primary RLC entity or the two RLC entities is less than the data split threshold, then submitting, by the transmitting PDCP entity, the PDCP PDU to the primary RLC entity; or if the total amount of the PDCP data volume and the RLC data volume used for initial transmission by the primary RLC entity or the two RLC entities is greater than or equal to the data split threshold, then submitting, by the transmitting PDCP entity, the PDCP PDU to the primary RLC entity or the secondary RLC entity.

According to a third aspect of the present invention, User Equipment (UE) is provided, comprising: a processor; and a memory, storing instructions, wherein when executed by the processor, the instructions execute the aforementioned methods.

### Brief Description of the Drawings

The above and other features of the present disclosure will become more apparent with the following detailed description in conjunction with the accompanying drawings.
FIG. 1a shows a schematic diagram of a protocol architecture of a packet duplication bearer in carrier aggregation;
FIG. 1b shows a schematic diagram of a protocol architecture of a split bearer in dual-connectivity;
FIG. 2 shows a flowchart of a method performed by user equipment according to an embodiment of the present disclosure;
FIG. 3 shows a flowchart of another method performed by user equipment according to an embodiment of the present disclosure; and
FIG. 4 shows a block diagram of user equipment according to an embodiment of the present disclosure.

### Detailed Description

The following describes the present disclosure in detail with reference to the accompanying drawings and specific embodiments. It should be noted that the present disclosure should not be limited to the specific embodiments described below. In addition, for simplicity, detailed description of the known art not directly related to the present disclosure is omitted to prevent confusion in understanding the present disclosure.

Some terms involved in the present disclosure are described below. If not specifically indicated, the terms involved in the present disclosure use the definitions herein. The terms given in the present disclosure may be named differently in NR, LTE, and eLTE, but unified terms are used in the present disclosure. When applied to a specific system, the terms may be replaced with terms used in the corresponding system.

**RRC:** Radio Resource Control.

**PDCP:** Packet Data Convergence Protocol.

**RLC:** Radio Link Control. An RLC entity may be an Unacknowledged Mode (UM) RLC entity or an Acknowledged Mode (AM) RLC entity.

**MAC:** Medium Access Control.

**PDU:** Protocol Data Unit. In the present disclosure, if not specifically indicated, the PDU may be a data PDU and/or a control PDU. For example, a PDCP PDU may be a PDCP data PDU and/or a PDCP control PDU.

**SDU:** Service Data Unit.

**Primary RLC Entity:** In carrier aggregation, after deactivation of packet duplication, a PDCP entity submits a PDCP PDU to a primary RLC entity. The primary RLC entity is one of two associated RLC entities, and can be configured by RRC signaling or designated via a MAC Control Element (CE) or predefined. In multi-connectivity, for a split bearer not configured with packet duplication, if a data split threshold is configured and the total amount of a PDCP data volume and data volume of the two RLC entities associated therewith is less than the configured data split threshold, then the PDCP entity submits the PDCP PDU to the primary RLC entity. For example, a base station configures the primary RLC entity for User Equipment (UE) via an information element primarypath (see 3GPP TS38.331 for detailed description of the information element) carried in RRC signaling, an information element cellGroup included in the information element and used for identifying a cell group identity, an information element logicalChannel included in the information element and used for identifying a logical channel identity, etc., and configures the data split threshold via an information element ul-DataSplitThreshold (see 3GPP TS38.331 and TS38.323 for detailed description of the information element). If the total amount of the PDCP data volume and the data volume of the two RLC entities associated therewith is larger than or equal to the configured data split threshold, then the PDCP entity submits the PDCP PDU to the associated primary RLC entity or secondary RLC entity. If the data split threshold is not configured, then the PDCP entity submits the PDCP PDU to one of the two associated RLC entities (for example, the primary RLC entity), or uses a link selection operation mode.

In the present disclosure, an RLC entity not designated as the primary RLC entity is referred to as a secondary RLC entity for ease of description of the embodiments of the present disclosure.

**PDCP Data Volume:** the total volume of data available for transmission in a PDCP entity.

**RLC Data Volume:** the total volume of data available for transmission in an RLC entity.

**Packet Duplication Activation/Deactivation Medium Access Control Control Element:** Duplication Activation/Deactivation MAC CE. The MAC CE is used for activation and/or deactivation of packet duplication. The packet duplication function of a bearer can be activated or deactivated by setting a bit corresponding to a bearer identity to "1" or "0." For details, see the related description in 3GPP TS38.321. In the present disclosure, the activation of packet duplication refers to that a transmitting PDCP entity duplicates a PDCP PDU and/or submits the PDCP PDU to two RLC entities associated therewith. The deactivation of packet duplication refers to that the transmitting PDCP entity submits the generated PDCP PDU to one of the two RLC entities associated therewith, i.e., submits the PDCP PDU to a primary RLC entity or submits the PDCP PDU to the primary RLC entity or a secondary RLC entity (which is to be specifically determined according to whether a data split threshold is configured and comparison of the total amount of a PDCP data volume and a data volume of one or both of the associated RLC entities with the data split threshold).

**Non-Split Bearer:** A wireless protocol of the bearer is located at a master base station (such as MgNB) or a secondary base station (such as SgNB), and uses a resource of the master base station or a resource of the secondary base station. That is, the wireless protocol of the bearer is located at the master base station (such as MgNB), and uses the resource of the master base station. Alternatively, the wireless protocol of the bearer is located at the secondary base station (such as SgNB), and uses the resource of the secondary base station. The non-split bearer may also be referred to as an unsplittable bearer.

**Split bearer:** In dual-connectivity, a wireless protocol of the bearer is located at a master base station (such as MgNB) and a secondary base station (such as SgNB), and a resource of the master base station and a resource of the secondary base station are used.

In the present disclosure, data received from or delivered to an upper layer is referred to as an SDU, and data submitted to or received from a lower layer is referred to as a PDU. For example, data received from or delivered to an upper layer by a PDCP entity is referred to as a PDCP SDU; and data received from or submitted to an RLC entity by the PDCP entity is referred to as a PDCP PDU (i.e., an RLC SDU).

Unless otherwise indicated, the bearer in the present disclosure may be a Data Radio Bearer (DRB), or may be a Signaling Radio Bearer (SRB). Correspondingly, the split bearer may be a split SRB or a split DRB, such as an MCG-split DRB, an MCG-split SRB, an SCG-split DRB, an SCG-split SRB, etc., all of which are split bearers. The non-split bearer may be a non-split SRB or a non-split DRB, such as an MCG DRB, an MCG SRB, an SCG DRB, an SCG SRB, etc., all of which are non-split bearers.

**Master Base Station:** Master NodeB, denoted as MeNB (a base station corresponding to E-UTRAN or LTE or eLTE) or MgNB (a base station gNB corresponding to NG-RAN or NR), which refers to a base station at least terminating at a control node mobility management entity (such as an S1-MME) used to process interaction between UE and a core network in multi-connectivity. In the present disclosure, master base stations are all denoted as MeNBs. It should be noted that all embodiments or definitions applicable to the MeNB are also applicable to the MgNB

**Secondary Base Station:** Secondary NodeB, denoted as SeNB (a base station corresponding to E-UTRAN or LTE or eLTE) or SgNB (a base station gNB corresponding to NG-RAN or NR), which refers to a base station that provides additional radio resources for UE but does not serve as an MeNB in multi-connectivity. In the present disclosure, secondary base stations are all denoted as SeNBs. It should be noted that all embodiments or definitions applicable to the SeNB are also applicable to the SgNB

**Primary Cell:** PCell. The PCell is a cell that operates on the primary frequency, and is a cell on which UE performs an initial connection establishment procedure or initiates a connection reestablishment procedure or which is designated as a primary cell during a handover procedure. The cell defined in the present disclosure may also be referred to as a carrier.

**Primary Secondary Cell:** PSCell. The PSCell is an SCG cell used to instruct UE to perform random access during an SCG switching procedure.

**Secondary Cell:** SCell. The SCell is a cell that operates at a secondary frequency. The cell can be configured after an RRC connection is established and can be used to provide additional radio resources.

**Cell Group:** abbreviated as CG, which is a group of serving cells or carriers associated with a master base station or a secondary base station in multi-connectivity. In the present disclosure, a group of cells associated with a certain logical channel or RLC entity of a packet duplication bearer or a group of cells providing radio resources or data transmission services to a certain logical channel or RLC entity of a packet duplication bearer is referred to as a cell group, where the cell may be a cell provided with an uplink carrier. It should be noted that the cell in the present disclosure may also be referred to as a set of beams.

**Serving Cell:** a primary cell or a secondary cell. In the present disclosure, a cell may also be referred to as a carrier. In the present disclosure, embodiments applicable to a cell are also applicable to a Bandwidth Part (BWP).

**Master Cell Group**: MCG. For UE not configured with multi-connectivity, the MCG consists of all serving cells. For UE configured with multi-connectivity, the MCG consists of a subset of serving cells (namely, a group of serving cells associated with an MeNB or MgNB) including a PCell and 0, 1, or a plurality of SCells.

**Secondary Cell Group**: SCG. The SCG is a group of serving cells associated with an SeNB or SgNB in multi-connectivity. The SCG may include one PSCell, and may also include one or a plurality of SCells.

**Multi-Connectivity:** an operation mode of UE in an RRC connected state. In the multi-connectivity, a plurality of cell groups are configured, and the plurality of cell groups include one MCG and one or a plurality of SCGs (that is, the UE is connected to a plurality of base stations). If only one MCG (or MeNB or MgNB) and one SCG (or SeNB or SgNB) are configured, then the multi-connectivity is referred to as dual-connectivity. That is, the UE in the connected state and having a plurality of receivers and/or transmitters is configured to use EUTRAN and/or 5G-RAN (or NG-RAN) radio resources provided by a plurality of different schedulers. The schedulers can be connected through non-ideal backhaul or ideal backhaul. The multi-connectivity defined in the present disclosure includes the dual-connectivity. A multi-connectivity data transmission mode includes, but is not limited to, packet duplication and link selection.

**Packet Duplication**: also referred to as duplication or data duplication or packet duplication or PDCP duplication or PDCP PDU duplication or PDCP SDU duplication or PDCP packet duplication (if not specifically indicated, the data in the present disclosure may be control plane signaling or user plane data, which respectively correspond to signaling of an SRB and data of a DRB). A PDCP entity submits the same PDCP PDU to two or more associated lower-layer entities (or RLC entities). In a multi-connectivity mode, the same data (or referred to as a packet, namely, a PDCP PDU or a PDCP SDU) is transmitted in serving cells of two or more CGs, that is, the same data is transmitted by using resources provided by a master base station (or MCG) and a secondary base station (or SCG) respectively, or the same data is submitted to lower layers (or RLC layers) located at the MCG and the SCG respectively, or the same data is transmitted on two or more different bearers. In a carrier aggregation or single-connectivity mode, the PDCP entity submits duplicate (or the same) PDCP PDUs to two or more associated RLC entities (or referred to as lower-layer entities) and/or logical channels, and a MAC entity transmits the PDCP PDUs to a receiving end via different carriers (or cells or serving cells) or different carrier groups. A receiving PDCP entity is responsible for monitoring and discarding the duplicate PDCP PDUs or SDUs.

**Link Selection:** A PDCP entity submits the same packet (namely, a PDCP PDU or a PDCP SDU) to only one RLC entity, and different packets can be transmitted via different RLC entities. In a link selection multi-connectivity mode, each PDCP PDU is transmitted to a receiving party via only one RLC entity.

In carrier aggregation, after deactivation of PDCP packet duplication, the PDCP entity submits the PDCP PDU to one of two or more RLC entities associated therewith (for example, the PDCP entity submits the PDCP PDU to a primary RLC entity). In the multi-connectivity mode, after deactivation of PDCP packet duplication, the PDCP entity transmits the PDCP PDU using a split bearer (or link selection) according to a configured split bearer-related parameter. For example, one cell group is selected from configured cell groups to perform packet transmission. That is, the PDCP entity submits the PDCP PDU to an RLC entity associated with an MCG or to an RLC entity associated with an SCG, or the PDCP entity submits the PDCP PDU to a primary RLC entity.

**Packet Duplication Bearer:** a bearer configured with packet duplication or a non-split bearer configured with packet duplication in a carrier aggregation or single-connectivity mode, including a packet duplication SRB and a packet duplication DRB. A PDCP entity of the bearer is associated with two or more RLC entities, two or more logical channels, and one MAC entity. Moreover, after the PDCP duplication function is activated, a transmitting PDCP entity submits duplicate (or the same) PDCP PDUs to the two or more associated RLC entities (or referred to as lower-layer entities) and/or two or more associated logical channels, and a MAC entity transmits the PDCP PDUs to a receiving end via different carriers (namely, cells or serving cells) or different cell groups. A receiving PDCP entity discards the duplicate PDCP PDUs or SDUs from the lower-layer entities.

**Packet Duplication Split Bearer:** a split bearer configured with packet duplication in a multi-connectivity mode. In the transmission mode, the same data is transmitted over a plurality of wireless protocols of the split bearer. A PDCP entity of the bearer is associated with two (or more) RLC entities, two (or more) logical channels, and two (or more) MAC entities. Moreover, after the PDCP duplication function is activated, a transmitting PDCP entity submits duplicate (or the same) PDCP PDUs to the two (or more) RLC entities (or referred to as lower-layer entities) and/or two (or more) logical channels, and a MAC entity transmits the PDCP PDUs to a receiving end via different carriers (namely, cells or serving cells). A receiving PDCP entity discards the duplicate PDCP PDUs or SDUs from the lower-layer entities.

In the present disclosure, the packet duplication bearer and the packet duplication split bearer may be of a newly defined bearer type, or may not be of a new bearer type but respectively represent a bearer or a non-split bearer configured with packet duplication and a split bearer configured with packet duplication.

The embodiments of the present disclosure use a scenario in which a PDCP PDU or SDU is repeatedly transmitted twice as an example (that is, one PDCP entity is associated with two RLC entities and/or two logical channels). However, the technical solution of the present disclosure is not limited to the scenario in which a PDCP PDU or SDU is repeatedly transmitted twice, and those skilled in the art can easily extend the technical solution to a scenario in which a PDCP PDU or SDU is repeatedly transmitted a plurality of times (that is, one PDCP entity is associated with a plurality of RLC entities and/or a plurality of logical channels).

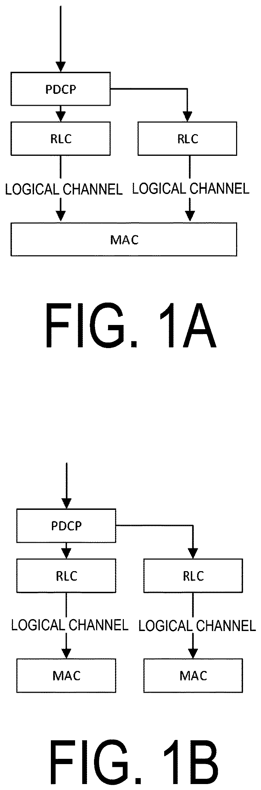

As an example, FIG. 1a shows a diagram of a protocol architecture of a packet duplication bearer. FIG. 1b shows a diagram of a protocol architecture of a split bearer. In the schematic diagram shown in FIG. 1a, a PDCP entity of a bearer is associated with two RLC entities, two logical channels, and one MAC entity. In the schematic diagram shown in FIG. 1b, a PDCP entity of a bearer is associated with two RLC entities, two logical channels, and two MAC entities.

Embodiments of operations performed by a transmitting PDCP entity and/or an RLC entity after deactivation of packet duplication in User Equipment (UE) are described below. The embodiments may also be executed at a base station side transmitting PDCP entity and/or RLC entity.

If packet duplication is already configured and the packet duplication is in a deactivated state (or an instruction to deactivate packet duplication is received), then for the purpose of MAC buffer status reporting, a PDCP data volume of the transmitting PDCP entity may include: (1) a PDCP SDU for which a PDCP data PDU has not been established; (2) a PDCP data PDU having not been submitted to an RLC entity, where the RLC entity is an RLC entity to be used after deactivation of packet duplication (namely, an RLC entity to which the PDCP entity is to transmit the PDCP PDU after the deactivation of packet duplication); (3) a PDCP control PDU (or a PDCP control PDU having not been submitted to the RLC entity, where the RLC entity is an RLC entity to be used after the deactivation of packet duplication, or an RLC entity to which the PDCP entity is to transmit the PDCP PDU after the deactivation of packet duplication); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

When receiving an instruction to deactivate packet duplication from an upper layer or a lower layer (or when packet duplication is configured, but the packet duplication is in a deactivated state), the transmitting PDCP entity can perform one of the following operations:
(1) If a data split threshold is configured and the total amount of a PDCP data volume and an RLC data volume of the two associated RLC entities waiting for initial transmission is greater than or equal to the data split threshold, then a PDCP PDU submitted to only one of the two associated RLC entities (including a PDCP PDU having been submitted to a primary RLC entity but having not been submitted to a secondary RLC entity and a PDCP PDU having been submitted to the secondary RLC entity but having not been submitted to the primary RLC entity) is discarded; otherwise, the PDCP PDU having been submitted to the primary RLC entity is discarded.
(2) The PDCP PDU submitted to only one of the two associated RLC entities (including the PDCP PDU having been submitted to the primary RLC entity but having not been submitted to the secondary RLC entity and the PDCP PDU having been submitted to the secondary RLC entity but having not been submitted to the primary RLC entity) is discarded.
(3) A PDCP PDU having been submitted to either of the RLC entities to be used after the deactivation of packet duplication (or the RLC entity to which the PDCP entity is to transmit the PDCP PDU after the deactivation of packet duplication) is discarded.

In the present disclosure, the data split threshold is used to determine whether to use the two RLC entities or to use only the primary RLC entity. The data split threshold may be configured by a base station for the UE by RRC signaling, such as ul-DataSplitThreshold defined in 3GPP TS38.331, a use method of which is defined in 3GPP TS38.323. Specifically, if the PDCP data volume of the transmitting PDCP entity is larger than or equal to the data split threshold, then the PDCP PDU is transmitted to one of the primary RLC entity and the secondary RLC entity. If the PDCP data volume of the transmitting PDCP entity is less than the data split threshold, then the PDCP PDU is transmitted to the primary RLC entity. In the present disclosure, that "the data split threshold is not configured" may also be described as that the data split threshold is configured to be "release," and may also be described as that the value of the data split threshold is infinity.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to either of the RLC entities, or the transmitting PDCP entity discards the PDCP PDU having been submitted to only one of the primary RLC entity and the secondary RLC entity. That is, the transmitting PDCP entity discards the PDCP PDU having been submitted to the primary RLC entity but having not been submitted to the secondary RLC entity and the PDCP PDU having been submitted to the secondary RLC entity but having not been submitted to the primary RLC entity. Alternatively, if the instruction to deactivate packet duplication from the upper layer (such as the RRC) or the lower layer (such as the MAC) is received, or if the packet duplication is deactivated, then the transmitting PDCP entity discards the PDCP PDU having been submitted to the RLC entity to be used.

Optionally, for the AM DRB, the PDCP entity instructs one of the RLC entities (for example, the primary RLC entity or the secondary RLC entity) to discard the PDCP PDU having been submitted to the two RLC entities (or the other RLC entity). Optionally, the PDCP PDU is a PDCP PDU for which a transmission success indication has not been received from the lower layer. For example, after the deactivation of packet duplication, the PDCP entity instructs the secondary RLC entity to discard the PDCP PDU having been submitted to the primary RLC entity or to discard the PDCP PDU having been submitted to the primary RLC entity and the secondary RLC entity.

Optionally, after the deactivation of packet duplication, the PDCP entity still receives data transmission service acknowledgment from the secondary RLC entity (or an RLC entity to which the PDCP entity no longer transmits any PDCP PDU), including an indication indicating that a PDCP PDU is successfully transmitted.

Optionally, after receiving the instruction to deactivate packet duplication (or when the RRC receives the instruction to deactivate packet duplication, or when the RRC instructs the PDCP entity to deactivate packet duplication), the secondary RLC entity re-establishes the RLC entity. That is, after the deactivation of packet duplication, the secondary RLC entity (or the RLC entity to which the PDCP entity no longer transmits any PDCP PDU) is re-established. Alternatively, after the deactivation of packet duplication, if the secondary RLC entity is no longer used (the PDCP entity no longer transmits any PDCP PDU to the secondary RLC entity), then the secondary RLC entity is re-established. The re-establishment of the RLC entity is to, for example, discard an RLC SDU, an RLC SDU segment, and an RLC PDU stored in the RLC entity, stop and reset all timers, and reset all status variables to initial values thereof. See description related to an RLC entity re-establishment procedure in 3GPP TS38.322 for details.

Optionally, after the deactivation of packet duplication (the secondary RLC entity receives the instruction to deactivate packet duplication or a discarding instruction), the secondary RLC entity (or the RLC entity to which the PDCP entity no longer transmits any PDCP PDU) discards an RLC SDU meeting the following condition: neither the RLC SDU nor any segment thereof has been submitted to the lower layer. The RLC entity may continue to transmit an RLC SDU or RLC PDU having not been discarded (that is, the RLC SDU or at least one segment thereof has been submitted to the lower layer).

In the present disclosure, unless otherwise indicated, the RLC data volume includes: (1) an RLC SDU or an RLC SDU segment having not been added to one RLC data PDU; (2) an RLC data PDU waiting for initial transmission; and (3) an RLC data PDU waiting for retransmission (for an RLC AM).

In the present disclosure, unless otherwise indicated, the "RLC entity to be used" refers to the RLC entity to which the PDCP entity is to transmit the PDCP PDU after the deactivation of packet duplication, and the "RLC entity no longer in use" refers to the RLC entity to which the PDCP entity no longer transmits any PDCP PDU after the deactivation of packet duplication.

According to the present disclosure, after receiving the instruction to deactivate packet duplication from the upper layer or the lower layer (or when packet duplication is configured, but the packet duplication is in a deactivated state), the transmitting PDCP entity discards the PDCP PDU having been submitted to either of the associated RLC entities, so that transmitting duplicate (or the same) PDCP PDUs or RLC SDUs on two RLC entities is avoided if possible. Therefore, the volume of data required to be transmitted is reduced, thereby conserving communication resources, and improving communication efficiency and communication speed.

According to the present disclosure, after the instruction to deactivate packet duplication from the upper layer or the lower layer is received (or when packet duplication is configured, but the packet duplication is in a deactivated state), the PDCP data volume is calculated. Therefore, communication resources can be effectively allocated according to the volume of data required to be transmitted, so that communication efficiency and communication speed can be improved.

In the present disclosure, the "deactivation of packet duplication," that "packet duplication is configured, but the packet duplication is in the deactivated state," and that "an instruction to deactivate packet duplication from the upper layer or the lower layer is received" are equivalent descriptions, and can be used interchangeably.

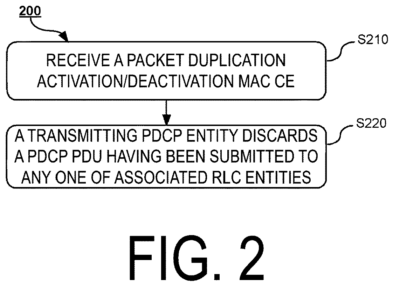

FIG. 2 shows a flowchart of a method 200 for User Equipment (UE) according to an embodiment of the present disclosure. A transmitting PDCP entity on the User Equipment (UE) side is configured with packet duplication, and is associated with two Radio Link Control (RLC) entities.

The method 200 involves operations of the transmitting PDCP entity after deactivation of packet duplication. As shown in FIG. 2, the method 200 includes step S210 and step S220.

In step S210, a packet duplication activation/deactivation Medium Access Control (MAC) Control Element (CE) is received.

In step S220, the transmitting PDCP entity discards a PDCP Protocol Data Unit (PDU) having been submitted to either of the associated RLC entities.

In the method 200, operations in a scenario in which the transmitting PDCP entity is associated with two RLC entities are described. However, those skilled in the art can easily extend the operations to operations in a scenario in which the transmitting PDCP entity is associated with more RLC entities. For example, in a scenario in which the transmitting PDCP entity is associated with M (M is a natural number greater than 2) RLC entities, after the deactivation of packet duplication, the transmitting PDCP entity can discard a PDCP PDU having been submitted to any M (M is a natural number less than N) associated RLC entities.

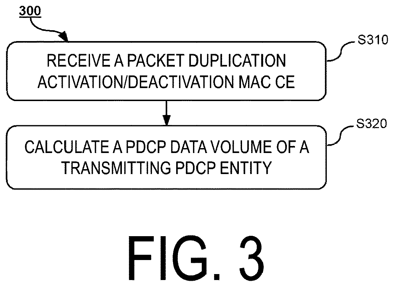

FIG. 3 shows a flowchart of a method 300 for User Equipment (UE) according to an embodiment of the present disclosure. A transmitting PDCP entity on the User Equipment (UE) side is configured with packet duplication, and is associated with two Radio Link Control (RLC) entities.

The method 300 involves calculation of a PDCP data volume after deactivation of packet duplication. As shown in FIG. 3, the method 300 includes step S310 and step S320.

In step S310, a packet duplication activation/deactivation Medium Access Control (MAC) Control Element (CE) is received.

In step S320, a PDCP data volume of the transmitting PDCP entity is calculated. The PDCP data volume includes: (1) a PDCP Service Data Unit (SDU) for which a PDCP data Protocol Data Unit (PDU) has not been established; (2) a PDCP data PDU having not been submitted to an RLC entity to be used after deactivation of packet duplication; (3) a PDCP control PDU having not been submitted to the RLC entity to be used after the deactivation of packet duplication; (4) a PDCP SDU to be retransmitted described by a PDCP entity re-establishment procedure for an Acknowledged Mode Data Radio Bearer (AM DRB); and (5) a PDCP data PDU to be retransmitted described by a data recovery procedure for the AM DRB.

In the method 300, the calculation of the PDCP data volume in the scenario in which the transmitting PDCP entity is associated with two RLC entities are described. However, those skilled in the art can easily extend the method to calculation of a PDCP data volume in a scenario in which the transmitting PDCP entity is associated with more RLC entities.

Specific embodiments are described below on the basis of carrier aggregation and dual-connectivity deployment scenarios.

### Embodiments Of Operations Of A Transmitting PDCP Entity And Calculation Of A PDCP Data Volume After Deactivation Of Packet Duplication In The Carrier Aggregation Scenario

### Embodiment 1: A Secondary RLC Entity Is Re-Established After Deactivation Of Packet Duplication

If packet duplication is configured and the packet duplication is in a deactivated state (or an instruction to deactivate packet duplication from an upper layer or a lower layer is received), then for the purpose of MAC buffer status reporting, a PDCP data volume of a transmitting PDCP entity may include: (1) a PDCP SDU for which a PDCP data PDU has not been established; (2) a PDCP data PDU having not been submitted to a primary RLC entity; (3) a PDCP control PDU (or a PDCP control PDU having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to the primary RLC entity.

Optionally, after the RRC entity receives an instruction to deactivate packet duplication of a certain bearer from the MAC entity or receives an indication from a secondary RLC entity indicating that a maximum number of retransmissions has been reached, or after the secondary RLC entity receives an instruction from the upper layer (such as the RRC layer) or the lower layer (such as the MAC), the secondary RLC entity is re-established.

### Embodiment 2: A Secondary RLC Entity Is Not Re-Established After Deactivation Of Packet Duplication

If packet duplication is configured and the packet duplication is in a deactivated state (or an instruction to deactivate packet duplication from an upper layer or a lower layer is received), then for the purpose of MAC buffer status reporting, a PDCP data volume of a transmitting PDCP entity may include: (1) a PDCP SDU for which a PDCP data PDU has not been established; (2) a PDCP data PDU having not been submitted to the lower layer (or a PDCP data PDU having not been submitted to a primary RLC entity); (3) a PDCP control PDU (or a PDCP control PDU having not been submitted to the lower layer or a PDCP control PDU having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

If the instruction to deactivate packet duplication from the upper layer (such as RRC) or the lower layer (such as MAC) is received, or if the packet duplication is deactivated, then the transmitting PDCP entity discards a PDCP PDU having been submitted to a secondary RLC entity but having not been submitted to the primary RLC entity. Alternatively, if the instruction to deactivate packet duplication from the upper layer (such as the RRC) or the lower layer (such as the MAC) is received, or if the packet duplication is deactivated, then the transmitting PDCP entity discards the PDCP PDU having been submitted to either of the RLC entities (including the secondary RLC entity and the primary RLC entity). Optionally, the PDCP PDU is a PDCP PDU for which a transmission success indication has not been received from the lower layer.

Optionally, if the instruction to deactivate packet duplication from the upper layer (such as the RRC) or the lower layer (such as the MAC) is received, or if the packet duplication is deactivated, then the transmitting PDCP entity still receives data transmission service acknowledgment from the secondary RLC entity, including an indication indicating that a PDCP PDU is successfully transmitted.

Optionally, after the deactivation of packet duplication (the secondary RLC entity receives the instruction to deactivate packet duplication or a discarding instruction), the secondary RLC entity (or the RLC entity to which the PDCP entity no longer transmits any PDCP PDU) discards an RLC SDU meeting the following condition: neither the RLC SDU nor any segment thereof has been submitted to the lower layer. The RLC entity may continue to transmit an RLC SDU or an RLC PDU having not been discarded (that is, the RLC SDU or at least one segment thereof has been submitted to the lower layer).

Optionally, for the AM DRB, the PDCP entity instructs one of the RLC entities (for example, the primary RLC entity or the secondary RLC entity) to discard the PDCP PDU having been submitted to the two RLC entities (or the other RLC entity). Optionally, the PDCP PDU is a PDCP PDU for which a transmission success indication has not been received from the lower layer. For example, after the deactivation of packet duplication (the secondary RLC entity receives the instruction to deactivate packet duplication or the discarding instruction), the PDCP entity instructs the secondary RLC entity (or the RLC entity to which the PDCP entity no longer transmits any PDCP PDU) to discard an RLC SDU having been submitted to the primary RLC entity or to discard an RLC SDU having been submitted to the primary RLC entity and the secondary RLC entity.

### Embodiments Of Operations Of A Transmitting PDCP Entity And Calculation Of A PDCP Data Volume After Deactivation Of Packet Duplication In The Dual-Connectivity Scenario

### Embodiment 1: Only A Primary RLC Entity Is Used And A Secondary RLC Entity Is Re-Established After Deactivation Of Packet Duplication

If packet duplication is configured and the packet duplication is in a deactivated state (or an instruction to deactivate packet duplication from an upper layer or a lower layer is received), then it is determined whether a data split threshold is configured. If the data split threshold is configured: preferably, if the total amount of a PDCP data volume (including a PDCP PDU having been submitted to a secondary RLC entity but having not been submitted to a primary RLC entity) of a transmitting PDCP entity and an RLC data volume used for initial transmission by the primary RLC entity associated with the PDCP entity is less than the data split threshold, then the transmitting PDCP entity submits the PDCP PDU to the primary RLC entity. Alternatively, if the total amount of the PDCP data volume (not including a PDCP PDU having been submitted to either of the RLC entities, namely, not including the PDCP PDU having been submitted to the secondary RLC entity but having not been submitted to the primary RLC entity nor a PDCP PDU having been submitted to the primary RLC entity but having not been submitted to the secondary RLC entity) of the transmitting PDCP entity and an RLC data volume used for initial transmission by the two RLC entities associated with the PDCP entity is less than the data split threshold, then the transmitting PDCP entity submits the PDCP PDU to the primary RLC entity.

In this case, for the purpose of MAC buffer status reporting, the PDCP data volume of the transmitting PDCP entity may include: (1) a PDCP SDU for which a PDCP data PDU has not been established; (2) a PDCP data PDU having not been submitted to the primary RLC entity, or a PDCP data PDU having not been submitted to the lower layer and a PDCP data PDU having been submitted to the secondary RLC entity but having not been submitted to the primary RLC entity; (3) a PDCP control PDU (or a PDCP control PDU having not been submitted to the primary RLC entity, or a PDCP control PDU having not been submitted to the lower layer and a PDCP control PDU having been submitted to the secondary RLC entity but having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to the primary RLC entity (or the transmitting PDCP entity discards the PDCP PDU having been submitted to the primary RLC entity but having not been submitted to the secondary RLC entity).

Optionally, after the RRC entity receives an instruction to deactivate packet duplication of a certain bearer from the MAC entity or receives an indication from the secondary RLC entity indicating that a maximum number of retransmissions has been reached, or after the secondary RLC entity receives an instruction from the upper layer (such as the RRC layer) or the lower layer (such as the MAC), the secondary RLC entity is re-established.

### Embodiment 2: Only A Primary RLC Entity Is Used And A Secondary RLC Entity Is Re-Established After Deactivation Of Packet Duplication

If packet duplication is configured and the packet duplication is in a deactivated state (or an instruction to deactivate packet duplication from an upper layer or a lower layer is received), and if a data split threshold is configured: preferably, if the total amount of a PDCP data volume and an RLC data volume used for initial transmission by a primary RLC entity associated with a PDCP entity is less than the data split threshold, then a transmitting PDCP entity submits a PDCP PDU to the primary RLC entity. Alternatively, if the total amount of the PDCP data volume of the transmitting PDCP entity and an RLC data volume used for initial transmission by two RLC entities associated with the PDCP entity is less than the data split threshold, then the transmitting PDCP entity submits a PDCP PDU to the primary RLC entity.

Preferably, for the purpose of determining whether to use link selection (or in order to determine whether to use two RLC entities, or in order to determine whether to use two cell groups, or in order to determine whether to use a secondary RLC entity, or in order to determine whether to use data splitting, etc.) (or in order to perform comparison with the data split threshold so as to determine whether to transmit a PDCP PDU to the primary RLC entity and/or the secondary RLC entity by using a split bearer not supporting packet duplication), the PDCP data volume includes: (1) a PDCP SDU for which a PDCP data PDU has not been established; (2) a PDCP data PDU having not been submitted to the primary RLC entity, or a PDCP data PDU having not been submitted to the lower layer and a PDCP data PDU having been submitted to the secondary RLC entity but having not been submitted to the primary RLC entity; (3) a PDCP control PDU (or a PDCP control PDU having not been submitted to the primary RLC entity, or a PDCP control PDU having not been submitted to the lower layer and a PDCP control PDU having been submitted to the secondary RLC entity but having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Alternatively, for the purpose of determining whether to use link selection (or in order to determine whether to use two RLC entities, or in order to determine whether to use two cell groups, or in order to determine whether to use a secondary RLC entity, or in order to determine whether to use data splitting, etc.) (or in order to perform comparison with the data split threshold so as to determine whether to transmit a PDCP PDU to the primary RLC entity and/or the secondary RLC entity by using a split bearer not supporting packet duplication), the PDCP data volume includes: (1) a PDCP SDU for which a PDCP data PDU has not been established; (2) a PDCP data PDU having not been submitted to the lower layer; (3) a PDCP control PDU (or a PDCP control PDU having not been submitted to the lower layer); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

For the purpose of MAC buffer status reporting, the PDCP data volume of the transmitting PDCP entity may include: (1) a PDCP SDU for which a PDCP data PDU has not been established; (2) a PDCP data PDU having not been submitted to the primary RLC entity, or a PDCP data PDU having not been submitted to the lower layer and a PDCP data PDU having been submitted to the secondary RLC entity but having not been submitted to the primary RLC entity; (3) a PDCP control PDU (or a PDCP control PDU having not been submitted to the primary RLC entity, or a PDCP control PDU having not been submitted to the lower layer and a PDCP control PDU having been submitted to the secondary RLC entity but having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to the primary RLC entity (or the PDCP PDU having been submitted to the primary RLC entity but having not been submitted to the secondary RLC entity).

Optionally, after the RRC entity receives an instruction to deactivate packet duplication of a certain bearer from the MAC entity or receives an indication from the secondary RLC entity indicating that a maximum number of retransmissions has been reached, or after the secondary RLC entity receives an instruction from the upper layer (such as the RRC layer) or the lower layer (such as the MAC), the secondary RLC entity is re-established.

### Embodiment 3: Only A Primary RLC Entity Is Used And A Secondary RLC Entity Is Not Re-Established After Deactivation Of Packet Duplication

If packet duplication is configured and the packet duplication is in a deactivated state (or an instruction to deactivate packet duplication from an upper layer or a lower layer is received), and if a data split threshold is configured: further, if the total amount of a PDCP data volume of a transmitting PDCP entity and an RLC data volume used for initial transmission by a primary RLC entity associated with the PDCP entity is less than the data split threshold (or if the total amount of the PDCP data volume of the transmitting PDCP entity and an RLC data volume used for initial transmission by two RLC entities associated with the PDCP entity is less than the data split threshold), then the transmitting PDCP entity submits a PDCP PDU to the primary RLC entity.

For the purpose of determining whether to use link selection (or in order to determine whether to use two RLC entities, or in order to determine whether to use two cell groups, or in order to determine whether to use a secondary RLC entity, or in order to determine whether to use data splitting, etc.) (or in order to perform comparison with the data split threshold so as to determine whether to transmit a PDCP PDU to the primary RLC entity and/or the secondary RLC entity by using a split bearer not supporting packet duplication), the PDCP data volume includes: (1) a PDCP SDU for which a PDCP data PDU has not been established; (2) a PDCP data PDU having not been submitted to the lower layer (or a PDCP data PDU having not been submitted to the primary RLC entity); (3) a PDCP control PDU (or a PDCP control PDU having not been submitted to the lower layer or a PDCP control PDU having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

For the purpose of MAC buffer status reporting, the PDCP data volume of the transmitting PDCP entity may include: (1) a PDCP SDU for which a PDCP data PDU has not been established; (2) a PDCP data PDU having not been submitted to the primary RLC entity (or the lower layer); (3) a PDCP control PDU (or a PDCP control PDU having not been submitted to the primary RLC entity (or the lower layer)); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to either of the RLC entities, or the transmitting PDCP entity discards the PDCP PDU having been submitted to only one of the primary RLC entity and the secondary RLC entity. That is, the transmitting PDCP entity discards the PDCP PDU having been submitted to the primary RLC entity but having not been submitted to the secondary RLC entity and the PDCP PDU having been submitted to the secondary RLC entity but having not been submitted to the primary RLC entity.

Optionally, if the instruction to deactivate packet duplication from the upper layer (such as the RRC) or the lower layer (such as the MAC) is received, or if the packet duplication is deactivated, then the transmitting PDCP entity still receives data transmission service acknowledgment from the secondary RLC entity, including an indication indicating that a PDCP PDU is successfully transmitted.

Optionally, after the deactivation of packet duplication (the secondary RLC entity receives the instruction to deactivate packet duplication or a discarding instruction), the secondary RLC entity (or the RLC entity to which the PDCP entity no longer transmits any PDCP PDU) discards an RLC SDU meeting the following condition: neither the RLC SDU nor any segment thereof has been submitted to the lower layer. The RLC entity may continue to transmit an RLC SDU or an RLC PDU having not been discarded (that is, the RLC SDU or at least one segment thereof has been submitted to the lower layer).

Optionally, for the AM DRB, the PDCP entity instructs one of the RLC entities (for example, the primary RLC entity or the secondary RLC entity) to discard the PDCP PDU having been submitted to the two RLC entities (or the other RLC entity). Optionally, the PDCP PDU is a PDCP PDU for which a transmission success indication has not been received from the lower layer. For example, after the deactivation of packet duplication, the PDCP entity instructs the secondary RLC entity (namely, the RLC entity to which the PDCP entity no longer transmits any PDCP PDU) (or the primary RLC entity) to discard the PDCP PDU (or the RLC SDU) having been submitted to the primary RLC entity (or the secondary RLC entity) or to discard the PDCP PDU (or the RLC SDU) having been submitted to the primary RLC entity and the secondary RLC entity.

### Embodiment 4: A Primary RLC Entity And A Secondary RLC Entity Are Used After Deactivation Of Packet Duplication

If packet duplication is configured and the packet duplication is in a deactivated state (or an instruction to deactivate packet duplication from an upper layer or a lower layer is received), and if a data split threshold is configured: further, if the total amount of a PDCP data volume of a transmitting PDCP entity and an RLC data volume used for initial transmission by a primary RLC entity associated with the PDCP entity is greater than or equal to the data split threshold (or if the total amount of the PDCP data volume of the transmitting PDCP entity and an RLC data volume used for initial transmission by two RLC entities associated with the PDCP entity is greater than or equal to the data split threshold), then the transmitting PDCP entity submits a PDCP PDU to the primary RLC entity or a secondary RLC entity.

For the purpose of determining whether to use link selection (or in order to determine whether to use two RLC entities, or in order to determine whether to use two cell groups, or in order to determine whether to use a secondary RLC entity, or in order to determine whether to use data splitting, etc.) (or in order to perform comparison with the data split threshold so as to determine whether to transmit a PDCP PDU to the primary RLC entity and/or the secondary RLC entity by using a split bearer not supporting packet duplication), the PDCP data volume includes: (1) a PDCP SDU for which a PDCP data PDU has not been established; (2) a PDCP data PDU having not been submitted to the lower layer (or the primary RLC entity); (3) a PDCP control PDU (or a PDCP control PDU having not been submitted to the lower layer (or the primary RLC entity)); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

For the purpose of MAC buffer status reporting, the PDCP data volume of the transmitting PDCP entity may include: (1) a PDCP SDU for which a PDCP data PDU has not been established; (2) a PDCP data PDU having not been submitted to the primary RLC entity (or the lower layer or the secondary RLC entity); (3) a PDCP control PDU (or a PDCP control PDU having not been submitted to the primary RLC entity (or the lower layer or the secondary RLC entity)); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to either of the RLC entities, or the transmitting PDCP entity discards the PDCP PDU having been submitted to only one of the primary RLC entity and the secondary RLC entity. That is, the transmitting PDCP entity discards the PDCP PDU having been submitted to the primary RLC entity but having not been submitted to the secondary RLC entity and the PDCP PDU having been submitted to the secondary RLC entity but having not been submitted to the primary RLC entity.

Optionally, after the deactivation of packet duplication, the secondary RLC entity (or the primary RLC entity) discards an RLC SDU meeting the following condition: neither the RLC SDU nor any segment thereof has been submitted to the lower layer. The RLC entity may continue to transmit an RLC SDU or an RLC PDU having not been discarded (that is, the RLC SDU or at least one segment thereof has been submitted to the lower layer).

Optionally, for the AM DRB, the PDCP entity instructs one of the RLC entities (for example, the primary RLC entity or the secondary RLC entity) to discard the PDCP PDU having been submitted to the two RLC entities (or the other RLC entity). Optionally, the PDCP PDU is a PDCP PDU for which a transmission success indication has not been received from the lower layer. For example, after the deactivation of packet duplication, the PDCP entity instructs the secondary RLC entity (or the primary RLC entity) to discard the PDCP PDU (or the RLC SDU) having been submitted to the primary RLC entity (or the secondary RLC entity) or to discard the PDCP PDU (or the RLC SDU) having been submitted to the primary RLC entity and the secondary RLC entity.

### Embodiment 5: A Data Split Threshold Is Not Configured, And Two RLC Entities Are Used After Deactivation Of Packet Duplication; Or A Data Split Threshold Is Not Configured, And A Primary RLC Entity Is Used And A Secondary RLC Entity Is Not Re-Established After Deactivation Of Packet Duplication

If packet duplication is configured and the packet duplication is in a deactivated state (or an instruction to deactivate packet duplication from an upper layer or a lower layer is received), and if a data split threshold is not configured, then for the purpose of MAC buffer status reporting, a PDCP data volume of a transmitting PDCP entity may include: (1) a PDCP SDU for which a PDCP data PDU has not been established; (2) a PDCP data PDU having not been submitted to the lower layer (or the primary RLC entity); (3) a PDCP control PDU (or a PDCP control PDU having not been submitted to the lower layer (or the primary RLC entity)); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to either of the RLC entities, or the transmitting PDCP entity discards the PDCP PDU having been submitted to only one of the primary RLC entity and the secondary RLC entity. That is, the transmitting PDCP entity discards the PDCP PDU having been submitted to the primary RLC entity but having not been submitted to the secondary RLC entity and the PDCP PDU having been submitted to the secondary RLC entity but having not been submitted to the primary RLC entity.

Optionally, after the deactivation of packet duplication (the secondary RLC entity receives the instruction to deactivate packet duplication or a discarding instruction), the secondary RLC entity (or the RLC entity to which the PDCP entity no longer transmits any PDCP PDU) discards an RLC SDU meeting the following condition: neither the RLC SDU nor any segment thereof has been submitted to the lower layer. The RLC entity may continue to transmit an RLC SDU or an RLC PDU having not been discarded (that is, the RLC SDU or at least one segment thereof has been submitted to the lower layer).

Optionally, for the AM DRB, the PDCP entity instructs one of the RLC entities (for example, the primary RLC entity or the secondary RLC entity) to discard the PDCP PDU having been submitted to the two RLC entities (or the other RLC entity). Optionally, the PDCP PDU is a PDCP PDU for which a transmission success indication has not been received from the lower layer. For example, after the deactivation of packet duplication, the PDCP entity instructs the secondary RLC entity (or the RLC entity to which the PDCP entity no longer transmits any PDCP PDU) to discard the RLC SDU having been submitted to the primary RLC entity or to discard the RLC SDU having been submitted to the primary RLC entity and the secondary RLC entity. That is, the PDCP entity instructs one of the RLC entities to discard the PDCP PDU having been submitted to the other one of the RLC entities.

Optionally, if the instruction to deactivate packet duplication from the upper layer (such as the RRC) or the lower layer (such as the MAC) is received, or if the packet duplication is deactivated, then the transmitting PDCP entity still receives data transmission service acknowledgment from the secondary RLC entity, including an indication indicating that a PDCP PDU is successfully transmitted.

### Embodiment 6: A Data Split Threshold Is Not Configured, And A Primary RLC Entity Is Used And A Secondary RLC Entity Is Re-Established After Deactivation Of Packet Duplication

If packet duplication is configured and the packet duplication is in a deactivated state (or an instruction to deactivate packet duplication from an upper layer or a lower layer is received), and if a data split threshold is not configured, then for the purpose of MAC buffer status reporting, a PDCP data volume of a transmitting PDCP entity may include: (1) a PDCP SDU for which a PDCP data PDU has not been established; (2) a PDCP data PDU having not been submitted to the primary RLC entity; (3) a PDCP control PDU (or a PDCP control PDU having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

Optionally, if the instruction to deactivate packet duplication from the upper layer (such as RRC) or the lower layer (such as MAC) is received, or if the packet duplication is deactivated, then the transmitting PDCP entity discards the PDCP PDU having been submitted to the primary RLC entity (or the PDCP PDU having been submitted to the primary RLC entity but having not been submitted to the secondary RLC entity).

Optionally, after the RRC entity receives an instruction to deactivate packet duplication of a certain bearer from the MAC entity or receives an indication from the secondary RLC entity indicating that a maximum number of retransmissions has been reached, or after the secondary RLC entity receives an instruction from the upper layer (such as the RRC layer) or the lower layer (such as the MAC), the secondary RLC entity is re-established.

It should be noted that the using the primary RLC entity (or the secondary RLC entity or the two RLC entities) in the embodiments of the present disclosure refers to that the transmitting PDCP entity submits a PDCP PDU to the primary RLC entity (or the secondary RLC entity or one of the two RLC entities).

### An embodiment of submitting a PDCP PDU to an RLC entity by a transmitting PDCP entity is described below.

For a split bearer, if a PDCP entity is configured with packet duplication, and if the packet duplication is in a deactivated state, then a transmitting PDCP entity performs the following operations:
If a data split threshold is configured, and if the total amount of a PDCP data volume and an RLC data volume used for initial transmission by two RLC entities associated with the PDCP entity is greater than or equal to the data split threshold, then a PDCP PDU is submitted to a primary RLC entity or a secondary RLC entity.

If a data split threshold is configured and the total amount of the PDCP data volume and the RLC data volume used for initial transmission by the two RLC entities associated with the PDCP entity is less than a configured threshold value (or the total amount of the PDCP data volume and an RLC data volume used for initial transmission by the primary RLC entity associated with the PDCP entity is less than the data split threshold), then the PDCP PDU is submitted to the primary RLC entity; otherwise, the PDCP PDU is submitted to the primary RLC entity or the secondary RLC entity.

If the data split threshold is not configured, then the PDCP PDU is submitted to the primary RLC entity (or the PDCP PDU is submitted to the primary RLC entity or the secondary RLC entity).

In an embodiment, the PDCP data volume may include: (1) a PDCP SDU for which a PDCP data PDU has not been established; (2) a PDCP data PDU having not been submitted to a lower layer; (3) a PDCP control PDU; (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

In an embodiment, the PDCP data volume may include: (1) a PDCP SDU for which a PDCP data PDU has not been established; (2) a PDCP data PDU having not been submitted to the primary RLC entity; (3) a PDCP control PDU (or a PDCP control PDU having not been submitted to the primary RLC entity); (4) a PDCP SDU to be retransmitted described by PDCP entity re-establishment (see 3GPP TS38.323) for an AM DRB; and (5) a PDCP data PDU to be retransmitted described by data recovery (see 3GPP TS38.323) for the AM DRB.

It should be noted that in the aforementioned embodiments, User Equipment (UE) may determine, according to whether two RLC entities or logical channels associated with the same bearer belong to different cell groups (namely, an MCG and an SCG), whether the bearer is a split bearer. Alternatively, a base station may also add indication information to bearer-related information configured for the UE by RRC signaling, and the indication information is used to indicate whether a PDCP entity is associated with a split bearer or a non-split bearer (or a non-split bearer supporting packet duplication). For example, an information element PDCP-Config is used to configure configurable PDCP parameters for an SRB and a DRB. The information element PDCP-Config includes an information element used to indicate whether the PDCP entity is associated with a split bearer or a non-split bearer (or a non-split bearer supporting packet duplication). On the basis of the indication information, after deactivation of packet duplication, the UE firstly determines the type of a bearer associated with the PDCP entity, and then performs the aforementioned operations corresponding to the type of the bearer. An example of the information element PDCP-Config is provided below.

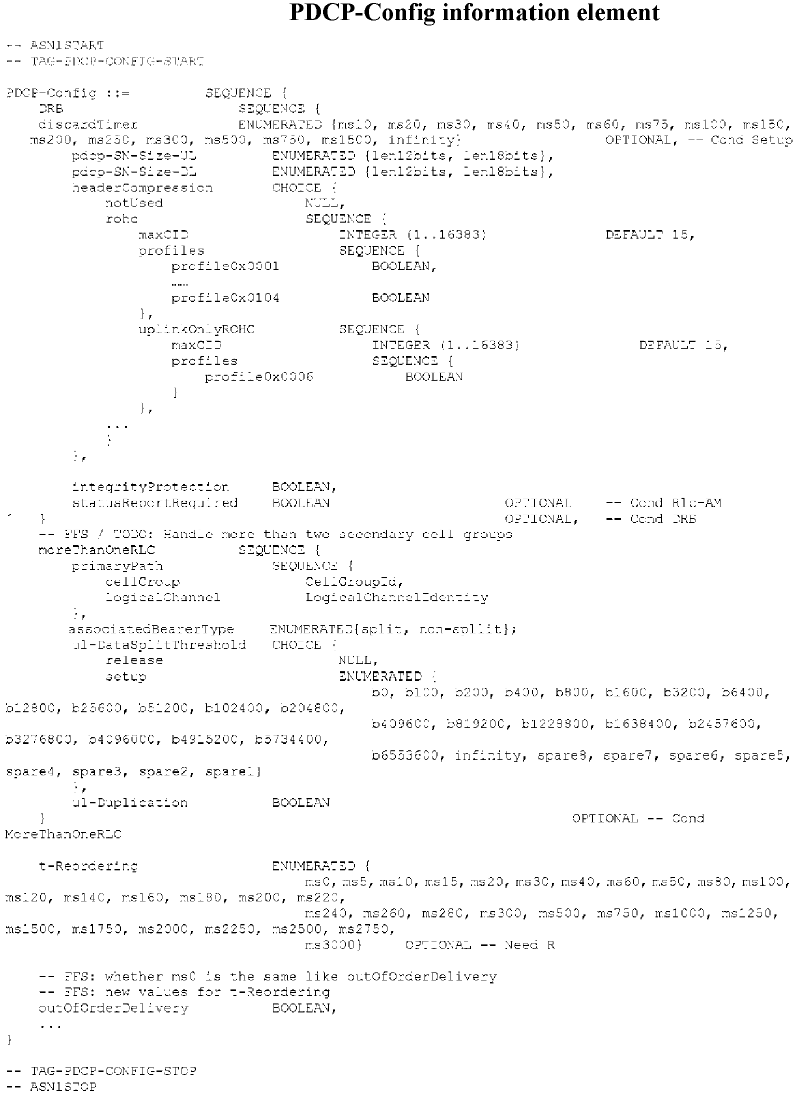

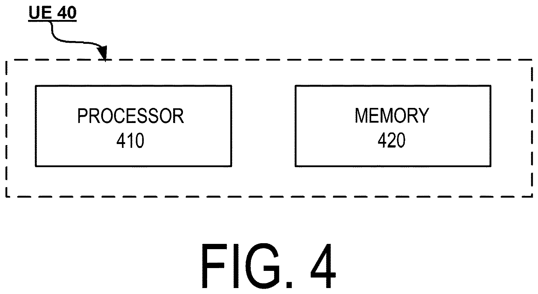

FIG. 4 shows a block diagram of user equipment 40 according to an embodiment of the present disclosure. As shown in FIG. 4, the user equipment 40 includes a processor 410 and a memory 420. The processor 410 may include, for example, a microprocessor, a microcontroller, an embedded processor, or the like. The memory 420 may include, for example, a volatile memory (for example, a Random Access Memory (RAM)), a Hard Disk Drive (HDD), a non-volatile memory (for example, a flash memory), or other memories. Program instructions are stored on the memory 420. The instructions, when run by the processor 410, can perform the aforementioned method performed by user equipment described in detail in the present disclosure.

The computer-executable instructions or program for implementing the functions of the embodiments of the present invention may be recorded on a computer-readable storage medium. The corresponding functions can be achieved by reading programs recorded on the recording medium and executing them by the computer system. The so-called "computer system" may be a computer system embedded in the device, which may include operating systems or hardware (e.g., peripherals). The "computer-readable storage medium" may be a semiconductor recording medium, an optical recording medium, a magnetic recording medium, a short-time dynamic memory program recording medium, or any other recording medium readable by a computer.

Various features or functional modules of the device used in the above embodiments may be implemented or executed by circuits (e.g., monolithic or multi-chip integrated circuits). Circuits designed to execute the functions described in this description may include general-purpose processors, Digital Signal Processors (DSPs), Application Specific Integrated Circuits (ASICs), Field Programmable Gate Arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of the advances in semiconductor technology, one or a plurality of embodiments of the present invention may also be implemented using these new integrated circuit technologies.

Furthermore, the present invention is not limited to the embodiments described above. Although various examples of the described embodiments have been described, the present invention is not limited thereto. Fixed or non-mobile electronic devices installed indoors or outdoors, such as AV equipment, kitchen equipment, cleaning equipment, air conditioner, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulted from the appropriate combinations of the technical means disclosed in different embodiments are also included within the technical scope of the present invention. In addition, components with the same effect described in the embodiments above may be replaced with one another.

## Claims

1. A method performed by User Equipment (UE), a transmitting Packet Data Convergence Protocol (PDCP) entity being configured with PDCP duplication and associated with two Radio Link Control (RLC) entities, wherein
the method comprises:
receiving an instruction to deactivate PDCP duplication; and
instructing, by the transmitting PDCP entity, a secondary RLC entity to discard all duplicate PDCP Protocol Data Units (PDUs).

2. The method according to claim 1, wherein
the PDCP PDU that the transmitting PDCP entity instructs to discard is a PDCP PDU for which a transmission success indication has not been received from a lower layer.

3. A method performed by User Equipment (UE), wherein
the method comprises:
receiving a PDCP duplication activation/deactivation Medium Access Control (MAC) Control Element (CE); and
calculating a PDCP data volume of the transmitting PDCP entity, wherein the PDCP data volume comprises: (1) a PDCP Service Data Unit (SDU) for which a PDCP data Protocol Data Unit (PDU) has not been established; (2) a PDCP data PDU having not been submitted to an RLC entity to be used after deactivation of PDCP duplication; (3) a PDCP control PDU having not been submitted to the RLC entity to be used after the deactivation of PDCP duplication; (4) a PDCP SDU to be retransmitted described by a PDCP entity re-establishment procedure for an Acknowledged Mode Data Radio Bearer (AM DRB); and (5) a PDCP data PDU to be retransmitted described by a data recovery procedure for the AM DRB.

4. The method according to claim 3, wherein the method further comprises:
discarding, by the transmitting PDCP entity, a PDCP PDU having been submitted to any one of associated RLC entities.

5. The method according to claim 4, wherein
the discarding, by the transmitting PDCP entity, a PDCP PDU having been submitted to any one of associated RLC entities comprises: discarding, by the transmitting PDCP entity, a PDCP PDU having been submitted to a primary RLC entity, or a PDCP PDU having been submitted to a secondary RLC entity but having not been submitted to the primary RLC entity, or a PDCP PDU having been submitted to the RLC entity to be used.

6. The method according to claim 1 or 4, wherein
the method further comprises: re-establishing an RLC entity to which the transmitting PDCP entity no longer transmits any PDCP PDU after the deactivation of PDCP duplication.

7. The method according to claim 1 or 4, wherein
after the deactivation of PDCP duplication, the transmitting PDCP entity still receives data transmission service acknowledgment from the RLC entity to which the PDCP PDU is no longer transmitted.

8. The method according to claim 3 or 4, wherein
the method further comprises: determining whether a data split threshold is configured; and
if the data split threshold is configured, and
if the total amount of the PDCP data volume and an RLC data volume used for initial transmission by a primary RLC entity or the two RLC entities is less than the data split threshold, then submitting, by the transmitting PDCP entity, the PDCP PDU to the primary RLC entity; or
if the total amount of the PDCP data volume and the RLC data volume used for initial transmission by the primary RLC entity or the two RLC entities is greater than or equal to the data split threshold, then submitting, by the transmitting PDCP entity, the PDCP PDU to the primary RLC entity or the secondary RLC entity.

9. User Equipment (UE), comprising:
a processor; and
a memory, storing instructions, wherein
when executed by the processor, the instructions execute the method according to any one of claims 1 to 8.
